# FASCICULE DE BREVET EUROPEEN

(11) **EP 0 348 792 B1**
(45) Date de publication et mention de la délivrance du brevet: **20.04.1994**
(21) Numéro de dépôt: 89111156.9
(22) Date de dépôt: 20.06.1989
(51) Int. Cl.: H04N 1/18, H04N 1/40

(54) **Procédé et dispositif de traitement de signaux électriques provenant de l'analyse d'une ligne d'une image**
Verfahren und Vorrichtung zur Verarbeitung elektrischer Signale, die mittels der Abtastung einer Bildzeile erhalten sind
Method and apparatus for processing electric signals obtained by scanning a line of an image

(30) Priorité: 27.06.1988 LU 87259
(43) Date de publication de la demande: 03.01.1990
(73) Titulaire: COMMUNAUTE EUROPEENNE DU CHARBON ET DE L'ACIER (CECA), L-2920 Luxembourg (LU)
(72) Inventeur: Odet, Christophe, F-38200 Vienne (FR); Jacquemod, Gilles, F-69100 Villeurbanne (FR); Goutte, Robert, F-69300 Caluire (FR)
(74) Mandataire: Weinmiller, Jürgen

(56) Documents cités:
- EP-A- 0 070 620
- EP-A- 0 213 539
- FR-A- 2 385 274
- US-A- 3 697 760
- PATENT ABSTRACTS OF JAPAN, vol. 6, no. 77 (E-106)[955], 14 mai 1982, page 52 E 106; & JP-A-57 14 250 (CANON K.K.) 25-01-1982

## Description

L'invention se réfère à un procédé de traitement de signaux électriques provenant de l'analyse d'une ligne d'une image issue de détecteurs linéaires tels qu'une barrette de photodétecteurs jointifs qui réalisent un échantillonnage du signal à pas constant. L'invention se réfère également à des dispositifs pour la mise en oeuvre de ce procédé.

Les barrettes de photodétecteurs, par exemple des photodiodes ou des cellules CCD (charge coupled device), sont utilisées pour analyser une image ligne après ligne, l'image défilant devant la barrette. Une telle image peut, par exemple, provenir d'un appareil de contrôle non destructif par rayons X, des bagages dans les aéroports.

Les détecteurs intègrent à chaque instant l'énergie lumineuse frappant la surface photosensible du détecteur. Le signal électrique de sortie du détecteur est échantillonné une fois par ligne et il est multiplexé avec les signaux de sortie des autres détecteurs pour constituer le signal d'une ligne de l'image. Le plus souvent, le signal sortant des détecteurs est quantifié pour permettre un traitement ultérieur en numérique.

A cause de l'intégration du signal lumineux sur la surface photosensible du détecteur, le signal électrique est lissé par rapport au signal lumineux correspondant. L'échantillonnage pose en outre des problèmes de repliement spectral lorsque le signal lumineux d'entrée est à large bande. Le lissage correspond à la convolution du signal par une porte centrée sur l'origine; le spectre du signal est multiplié par la fonction de transfert de ce filtre, qui est un sinus cardinal.

Si le signal lumineux est à large bande, la fonction de transfert du filtre limite l'étendue spectrale du signal lissé. L'effet du filtre de lissage est de privilégier les basses fréquences. On observe donc deux phénomènes qui dégradent l'information dans la bande utile du signal: D'une part, le signal a subi un filtrage basse fréquence et d'autre part, les parties repliées du spectre perturbent les basses fréquences.

Une diminution éventuelle de la taille de la surface photosensible des photodétecteurs augmenterait certes la résolution, mais ne changerait rien au problème du repliement du spectre. On pourrait penser à faire passer le signal électrique multiplexé dans un filtre dont la fonction de transfert serait l'inverse de celle correspondant à l'intégration de l'information sur la surface photosensible du détecteur. Mais cette correction du spectre n'éliminerait pas les contributions du signal dues au repliement des hautes fréquences.

L'invention a donc pour but de concevoir un meilleur procédé de traitement de signaux électriques provenant de l'analyse d'une ligne d'une image par au moins une barrette de photodétecteurs jointifs qui réalisent un échantillonnage du signal à pas constant. Ce but est atteint sur le plan du procédé par le fait qu'on effectue k analyses de la même ligne avec des décalages latéraux respectifs de 1/k du pas des photodétecteurs, qu'on génère un signal suréchantillonné en multiplexant les k échantillons et qu'on soumet le signal suréchantillonné à un filtrage temporel inverse au filtrage inhérent au lissage spatial des photodétecteurs.

En ce qui concerne des dispositifs pour la mise en oeuvre de ce procédé, référence est faite aux revendications correspondantes.

L'invention sera décrite ci-après plus en détail à l'aide de quelques exemples de mise en oeuvre et des dessins annexés.

Fig. 1 représente très schématiquement le principe du procédé selon l'invention.

Fig. 2 est un schéma bloc d'un premier exemple de mise en oeuvre de ce procédé impliquant une barrette unique.

Fig. 3 est une variante à la fig. 2 impliquant quatre barrettes jointives.

Fig. 4 est une autre variante impliquant quatre barrettes non jointives.

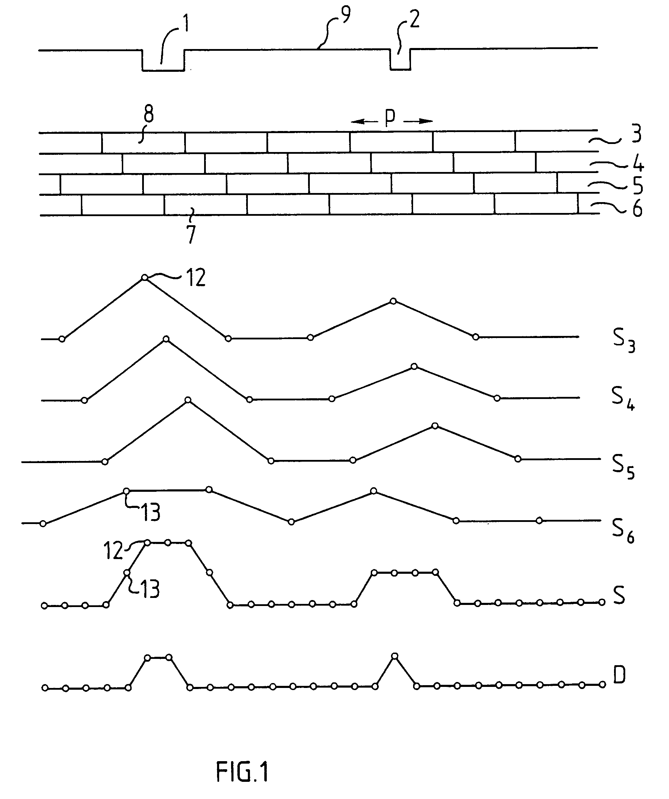

La fig. 1 fait référence à un échantillon d'une tôle d'acier qui comporte deux défauts artificiels sous forme de rainures de largeurs différentes. Lorsqu'on balaye cette tôle perpendiculairement aux rainures avec une tête de mesure idéale, on obtient un signal 9 tel que représenté en haut de la fig. 1, les deux rainures correspondant aux créneaux 1 et 2. S'il s'agit de fissures provenant par exemple d'une soudure incorrecte d'une tôle d'acier, la largeur des créneaux est toujours faible par rapport aux dimensions d'un photodétecteur. Il est donc impossible d'établir avec un tel photodétecteur un signal de mesure qui soit une image fidèle des fissures.

En dessous de ce signal idéal, la fig. 1 montre quatre barrettes 3, 4, 5 et 6 de photodétecteurs tels que 7 ou 8. On suppose que les photodétecteurs sont jointifs et qu'ils sont disposés au pas p constant au sein de chaque barrette. Les quatre barrettes sont décalées mutuellement d'une distance p/4 et elles sont supposées lire simultanément la même ligne de l'image.

La fig. 1 montre en outre quatre signaux enregistrés par l'ensemble des photodétecteurs d'une barrette, à savoir un signal S₃ concernant la barrette 3, un signal S₄ concernant la barrette 4, et ainsi de suite pour les barrettes 5 et 6.

Les barrettes photosensibles telles que celles du type CCD (charge coupled device) sont livrées avec une électronique de prétraitement et de conversion en numérique, de sorte que les signaux S₃ à S₆ symbolisent la succession des valeurs numériques fournies par les barrettes 3 à 6 respectivement. En comparant le signal 9 en tête de la fig. 1 avec la position des différents photodétecteurs des barrettes 3 à 6, on peut facilement reconstituer les signaux S₃ à S₆. Ainsi, le signal S₃ commence avec deux niveaux "zéro" correspondant aux deux premiers photodétecteurs de cette barrette, qui ne sont pas affectés par l'une des rainures 1 et 2. Puis, on observe une valeur 12 non nulle correspondant au photodétecteur 8, qui recouvre la totalité de la rainure 1. Les deux détecteurs suivants affichent de nouveau la valeur zéro et ainsi de suite.

L'amplitude 12 d'une valeur non nulle est proportionnelle à l'intégration de la partie du créneau tel que 1 affectée par le détecteur. Ainsi, le détecteur 8 de la barrette 3 recouvrant la totalité du créneau 1 conduit à une amplitude 12 plus élevée que celle créée par le photodétecteur, qui recouvre totalement le créneau 2 de largeur plus réduite. De même, un détecteur 7 de la barrette 6, qui ne recouvre que partiellement le créneau 1, conduit à une amplitude 13 plus faible que l'amplitude 12.

L'analyse du signal optique par une seule barrette de photodétecteur donnerait donc l'un des signaux S₃ à S₆, qui sont loin d'être significatifs pour le signal 9 en tête de la figure. Cela a deux causes principales:
a) un photodétecteur intègre le signal sur sa surface élémentaire, ce qui entraîne une perte des parties haute fréquence du signal optique, cet effet pouvant être appelé "lissage spatial".
b) Le signal idéal est échantillonné au pas p. N'ayant accès au signal qu'une fois échantillonné, on observe un repliement spectral lorsque le signal idéal est à large bande. Une diminution de la taille des photodétecteurs certes augmenterait la résolution, mais ne changerait rien au problème de repliement spectral. D'autre part, un filtrage inverse à l'effet de lissage spatial ne permet pas d'éliminer la perturbation des basses fréquences par les hautes fréquences suite au repliement spectral.

Conformément à l'invention, les quatre signaux S₃ à S₆ sont entrelaçés ou multiplexés pour donner le signal suréchantillonné S, qui comporte une succession des quatre amplitudes des photodétecteurs de rang identique dans les quatre barrettes. Ainsi, l'amplitude 12 du signal S₃ et l'amplitude 13 du signal S₆ sont marquées sur le signal suréchantillonné S aux endroits qui leur sont propres.

Le signal S est alors soumis à une déconvolution dans un filtre autoregressif, qui réalise le filtrage inverse à celui correspondant à l'intégration du signal sur la surface des photodétecteurs. Ce signal déconvolué D constitue une image assez fidèle du signal figurant en tête de cette figure, car ce filtre est adapté à la forme particulière de la fonction de filtrage lors de l'intégration du signal par les photodétecteurs (fonction porte).

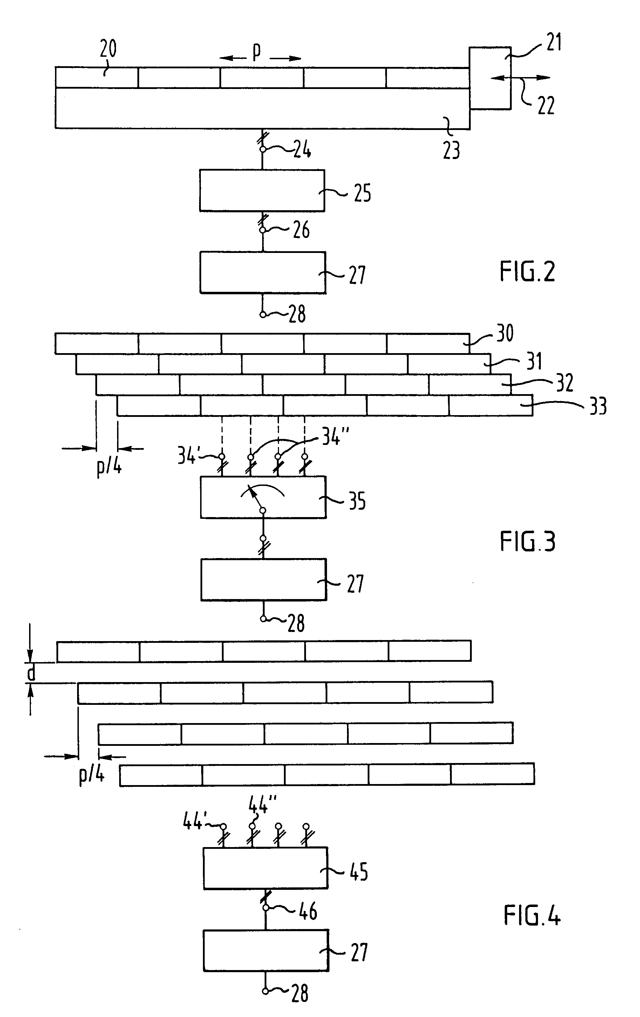

Le procédé tel qu'il a été expliqué ci-dessus à l'aide de la fig. 1 peut être mis en oeuvre de plusieurs façons. Une première réalisation, qui est représentée sur la fig. 2, fait usage d'une seule barrette CCD 20, qui est mécaniquement couplée à un dispositif de décalage 21. Ce dispositif comporte un moteur pas à pas, qui, après chaque échantillonnage, déplace la barrette 20 en direction de la ligne (symbolisée par une flèche 22) d'une distance de p/4. Ainsi, la barrette prend successivement les positions qui correspondent aux barrettes 3, 4, 5, 6 sur la fig. 1. Puis, la barrette revient vers la position d'origine et un nouveau cycle de quatre échantillonnages commence après l'avance de la tôle d'un pas perpendiculairement à la flèche 22.

Une barrette de photodétecteur du type CCD du commerce est normalement livrée en association avec une électronique 23 de prétraitement et de conversion en numérique, qui fournit sur une sortie 24 en succession les valeurs correspondant aux différents détecteurs de la barrette. Chaque valeur est par exemple codée sur huit bits, qui sont disponibles en parallèle. Ces valeurs sont appliquées à une mémoire dite de suréchantillonnage 25, dont la capacité correspond au nombre de valeurs provenant de quatre cycles d'échantillonnage de la barrette. A la sortie 26 de cette mémoire, ces valeurs sont entrelaçées de sorte qu'on y dispose d'une succession des quatre échantillons provenant d'un même détecteur et puis les valeurs correspondant aux détecteurs suivants et ainsi de suite. A la sortie 26 on retrouve donc l'équivalent du signal S de la fig. 1. Cette succession de valeurs est enfin appliquée à un filtre autoregressif 27, dont la fonction de transfert est l'inverse de celle inhérente au lissage spatial des photodétecteurs de la barrette. Le filtre est par exemple du type registre à décalage bouclé. Le repliement spectral ne fausse pratiquement plus le signal S, car l'axe de repliement est quatre fois plus éloigné en fréquence que dans le cas d'un signal non suréchantillonné. On obtient donc à la sortie 28 de ce filtre un signal D (voir fig. 1), qui représente assez fidèlement la forme du signal physique 9 à la tête de la fig. 1.

Si, pour des raisons de rapidité et de stabilité mécanique du dispositif, un décalage pas à pas d'une barrette telle que 20 n'est pas faisable, on utilise quatre barrettes 30, 31, 32, 33, qui sont montées de sorte que ces photodétecteurs reçoivent simultanément la lumière provenant de la même ligne à analyser. Chaque barrette est munie de sa propre électronique de prétraitement telle que 23 (fig. 2) et fournit sur une sortie 34′ (pour la barrette 30) ou 34′′ (pour la barrette 31) et ainsi de suite la succession des valeurs numériques correspondant aux différents détecteurs à un multiplexeur 35, qui a la même fonction que la mémoire de suréchantillonnage 25 de la fig. 2, excepté la mémorisation, et il fournit par sa sortie 36 la suite suréchantillonnée conformément au signal S de la fig. 1. Le filtre autoregressif 27 est le même que précédemment.

Enfin, la fig. 4 montre une autre variante, qui se distingue de celle conformément à la fig. 3 par une certaine distance d entre les quatre barrettes 40, 41, 42, 43 perpendiculairement à la direction de décalage. A un instant donné, les quatre barrettes "lisent" donc des lignes différentes de l'image à analyser. Le suréchantillonnage doit donc tenir compte du défilement de l'image perpendiculairement à la direction de ligne. Comme précédemment, chaque barrette est associée à son électronique de prétraitement et fournit sur une sortie unique telle que 44′ pour la barrette 40 et 44′′ pour la barrette 41 ls succession des valeurs de la ligne analysée par la barrette respective à un instant donné. C'est une mémoire de synchronisation et de suréchantillonnage 45 qui réarrange les valeurs provenant des différentes barrettes et appartenant à la même ligne, en fonction de la vitesse de défilement perpendiculairement à la direction ce ligne. Cette mémoire doit donc avoir une capacité plus grande que la mémoire 25 de la fig. 1, car elle doit pouvoir stocker une partie de l'image correspondant à la surface couverte par les quatre barrettes et ses interspaces d. A la sortie 46 de cette mémoire, on retrouve alors les mêmes valeurs qu'à la sortie 36 et 26 des figures précédentes, qui sont alors soumises à un filtrage dans un filtre 27 comme précédemment.

Bien entendu, l'invention n'est pas limitée aux exemples de réalisation décrites ci-dessus. On peut en particulier choisir un taux de suréchantillonnage k autre que quatre. En plus, on peut, outre l'analyse des fissures dans des tôles d'acier à l'aide des rayons X, procéder à l'analyse d'un cliché photographique ou au contrôle non destructif des matériaux par un rayonnement convenable tel que visible, infrarouge ou ultra-violet. Le procédé selon l'invention permet d'améliorer les deux facteurs limitatifs liés à la nature des barrettes de photodétecteurs; à savoir le lissage et le repliement spectral. Grâce au suréchantillonnage on diminue l'effet de repliement du spectre. On peut alors déconvoluer le signal sur une plus grande étendue spectrale. Certes, on obtient toujours une version filtrée passe-bas du signal idéal, mais on dispose d'informations correctes sur un domaine fréquentiel plus large et on a diminué l'effet de lissage des photodétecteurs.

## Revendications

1. Procédé de traitement de signaux électriques provenant de l'analyse d'une ligne d'une image issue de détecteurs linéaires, tels qu'une barrette de photodétecteurs jointifs qui réalisent un échantillonnage du signal à pas constant, procédé selon lequel on effectue k analyses de la même ligne avec des décalages latéraux respectifs de 1/k du pas des photodétecteurs, on génère un signal suréchantillonné en multiplexant les k échantillons et on soumet le signal suréchantillonné à un filtrage temporel inverse au filtrage inhérent au lissage spatial des photodétecteurs.

2. Dispositif pour la mise en oeuvre du procédé selon la revendication 1, caractérisé en ce qu'une barrette (2) de photodétecteurs est disposée de façon mobile en direction de la ligne à analyser pour permettre la lecture successive de k échantillons de chaque détecteur (tel que 7, 8), que la suite des signaux correspondant à l'échantillonnage d'une ligne est appliquée à une mémoire de suréchantillonnage (25) dont la sortie (26) fournit ledit signal suréchantillonné (S) et que ce dernier signal est appliqué à un filtre temporel (27), dont la fonction de transfert est l'inverse de celle du filtrage inhérent au lissage spatial due à la taille des photodétecteurs.

3. Dispositif pour la mise en oeuvre du procédé selon la revendication 1, caractérisé en ce que k barrettes jointives (30 à 33) de photodétecteurs sont disposées en parallèle pour analyser en même temps k fois la même ligne de l'image, chaque barrette étant décalée latéralement par rapport à la barrette adjacente d'une distance correspondant à 1/k du pas (p) des photodétecteurs, que les k barrettes sont reliées, par leurs sorties série (34′, 34′′) fournissant successivement des signaux (S₃ à S₆) correspondant à l'échantillonnage des différents points de ladite ligne, à un multiplexeur commun (35), qui fournit ledit signal suréchantillonné (S) à un filtre temporel (27) dont la fonction de transfert est l'inverse de celle inhérente au lissage spatial des photodétecteurs.

4. Dispositif pour la mise en ouvre du procédé selon la revendication 1, caractérisé en ce que k barrettes sont disposées en parallèle pour analyser successivement k fois la même ligne de l'image, chaque barrette étant décalée latéralement par rapport à la barrette adjacente d'une distance correspondant à 1/k du pas des photodétecteurs, que les k barrettes sont reliées par leurs sorties série (44′, 44′′) à une mémoire commune de suréchantillonnage (45) dont la sortie (46) fournit ledit signal suréchantillonné (S) et que ce dernier signal est appliqué à un filtre temporel (27), dont la fonction de transfert est l'inverse de celle du filtrage inhérent au lissage spatial des photodétecteurs.

5. Dispositif selon l'une des revendications 2 à 4, caractérisé en ce que, les barrettes étant associées à un circuit de prétraitement (23) impliquant une conversion des signaux en numérique, le filtre (27) est constitué par un filtre autoregressif numérique du type registre à décalage bouclé.

## Claims

1. A method for processing an electric signal constituting the analysis of a line of an image and issued by linear detectors such as a strip of adjacent photodetectors which carry out a sampling of the signal at a constant pitch, wherein k analyses of the same line with lateral shifts respectively of 1/k steps of the photodetectors are carried out, then an oversampled signal is generated by multiplexing the k samples, and the oversampled signal is submitted to a time filtering which is inverse to the filtering inherent to the spatial smoothing of the photodetectors.

2. A device for implementing the method according to claim 1, characterized in that a strip (20) of photodetectors is disposed movably in the direction of the line to be analyzed in order to permit the successive reading of k samples of each detector (such as 7, 8), that the succession of signals corresponding to the sampling of a line is applied to an oversampling memory (25), the output (26) of which supplies said over-sampled signal, and that this latter signal is applied to a time filter (27), the transfer function of which is inverse to that of the filtering inherent to the spatial smoothing due to the size of the photodetectors.

3. A device for implementing the method according to claim 1, characterized in that k adjacent strips (30 to 33) of photodetectors are disposed in parallel in order to analyze simultaneously k times the same line of the image, each strip being shifted laterally with respect to the adjacent strip by a distance corresponding to 1/k of the pitch (p) of the photodetectors, that the k strips are connected, by their serial outputs (34', 34'') supplying successively signals (S₃ to S₆) corresponding to the sampling of the different pixels of said line, to a common multiplexer (35), which supplies said over-sampled signal (S) to a time filter the transfer function of which is inverse to that inherent to the spatial smoothing of the photodetectors.

4. A device for implementing the method according to claim 1, characterized in that k strips are disposed in parallel for analysing successively k times the same line of the image, each strip being shifted laterally with respect to the adjacent strip by a distance corresponding to 1/k of the pitch of the photodetectors, that the k strips are connected by their serial outputs (44', 44'') to a common oversampling memory (45), the output (46) of which supplies said oversampled signal (S), and that said latter signal is applied to a time filter (27), the transfer function of which is inverse to that of the filtering inherent to the spatial smoothing of the photodetectors.

5. A device according to one of claims 2 to 4, characterized in that, the strips being associated to a pre-processing circuit (23) implying a conversion of the signals into digital form, the filter (27) is constituted by an autoregressive filter of the looped shift register type.

## Patentansprüche

1. Verfahren zur Verarbeitung elektrischer Signale, die von der Analyse einer Zeile eines Bildes mittels linearer Detektoren stammen, z.B. einer Leiste aneinanderstoßender Photodetektoren, die eine Abtastung des Signals mit konstanter Schrittweite durchführen, wobei k Analysen der gleichen Zeile mit jeweiligen seitlichen Verschiebungen von 1/k der Schrittweite der Photodetektoren erfolgen, dann ein übergetastetes Signal durch Multiplexierung der k Tastproben erzeugt wird und das übergetastete Signal einer Zeitfilterung unterworfen wird, die zur der Raumglättung der Photodetektoren inhärenten Filterwirkung invers ist.

2. Vorrichtung zur Durchführung des Verfahrens nach Anspruch 1, dadurch gekennzeichnet, daß eine Leiste (20) von Photodetektoren in Richtung der zu analysierenden Zeile beweglich angeordnet ist, um das aufeinanderfolgende Lesen von k Tastproben jedes Detektors (wie 7, 8) zu erlauben, daß die Folge der der Abtastung einer Zeile entsprechenden Signale an einen Übertastspeicher (25) angelegt wird, dessen Ausgang (26 das übergetastete Signal (S) liefert, und daß dieses letztere Signal an ein Zeitfilter (27) gelangt, dessen Übertragungsfunktion zur der Raumglättung aufgrund der Größe der Photodetektoren inhärenten Übertragungsfunktion invers ist.

3. Vorrichtung zur Durchführung des Verfahrens nach Anspruch 1, dadurch gekennzeichnet, daß k aneinandergrenzende Leisten (30 bis 33) von Photodetektoren parallel angeordnet sind, um gleichzeitig k mal die gleiche Zeile des Bilds zu analysieren, wobei jede Leiste seitlich in Bezug auf die benachbarte Leiste um einen Abstand verschoben ist, der 1/k der Schrittweite (p) der Photodetektoren entspricht, daß die k Leisten über ihre Serienausgänge (34', 34''), die nacheinander Signale (S₃ bis S₆), die der Abtastung der verschiedenen Punkte dieser Zeile entsprechen, an einen gemeinsamen Multiplexer (35) angeschlossen sind, der das übergetastete Signal (S) an ein Zeitfilter (27) liefert, dessen Übertragungsfunktion zu der der Raumglättung der Photodetektoren inhärenten Übertragungsfunktion invers ist.

4. Vorrichtung zur Durchführung des Verfahrens nach Anspruch 1, dadurch gekennzeichnet, daß k Leisten von Photodetektoren parallel angeordnet sind, um nacheinander k mal die gleiche Zeile des Bilds zu analysieren, wobei jede Leiste seitlich in Bezug auf die benachbarte Leiste um einen Abstand verschoben ist, der 1/k der Schrittweite der Photodetektoren entspricht, daß die k Leisten über ihre Serienausgänge (44', 44'') mit einem gemeinsamen Übertastungsspeicher (45) verbunden sind, dessen Ausgang (46) das übergetastete Signal (S) liefert, und daß dieses letztere Signal an ein Zeitfilter (27) angelegt wird, dessen Übertragungsfunktion zur der Raumglättung der Photodetektoren inhärenten Übertragungsfunktion invers ist.

5. Vorrichtung nach einem der Ansprüche 2 bis 4, dadurch gekennzeichnet, daß für den Fall, daß die Leisten einem Vorverarbeitungskreis (23) zugeordnet sind, der eine Umwandlung der Signale in digitale Signale einschließt, das Filter (27) aus einem digitalen autoregressiven Filter nach eines rückgekoppelten Schieberegisters besteht.
